# EUROPEAN PATENT APPLICATION

(11) **EP 4 566 495 A1**
(43) Date of publication of application: **11.06.2025**
(21) Application number: 24217765.7
(22) Date of filing: 05.12.2024
(51) Int. Cl.: A47J 37/06

(54) **TOP-VISIBLE AIR FRYER**

(30) Priority: 08.12.2023 CN 202323360493 U; 02.02.2024 CN 202420260125 U
(71) Applicant: Ningbo Careline Electric Appliance Co., Ltd., Ningbo, Zhejiang 315000 (CN)
(72) Inventor: ZHANG, Yichi, Ningbo, Zhejiang (CN); PAN, Huayuan, Ningbo, Zhejiang (CN); BAI, Rongjie, Ningbo, Zhejiang (CN); LIANG, Jiahe, Ningbo, Zhejiang (CN); HUANG, Chengzhou, Ningbo, Zhejiang (CN)
(74) Representative: Meyer-Dulheuer MD Legal Patentanwälte PartG mbB

(57) **Abstract**

The present disclosure relates to the technical field of kitchen household appliances and cooking appliances, in particular to a top-visible air fryer. A top-visible air fryer, characterized by comprising: a fryer body, internally provided with a cooking chamber with a top opening, wherein an inner transparent plate for closing the top opening is arranged at the top opening; a decorative ring, arranged above the top opening, wherein a viewing window corresponding to the top opening is arranged in a middle of the decorative ring, and a visible panel is arranged at an upper opening of the viewing window; and a heat insulation ring, arranged between the top opening and the decorative ring, wherein an open pore corresponding to the top opening is arranged in a middle of the heat insulation ring, a lower side of the heat insulation ring is connected to the fryer body, and an upper side of the heat insulation ring is connected to a lower side of the decorative ring.

## Description

### Top-Visible Air Fryer

### CROSS-REFERENCE TO RELATED APPLICATION

The present disclosure claims the priority of the Chinese patent application No. 2023233604933, filed to the China Patent Office on December 08, 2023, and entitled "Top-visible Air Fryer", and the priority of the Chinese patent application No. 2024202601257, filed to the China Patent Office on February 02, 2024, and entitled "Top-visible Air Fryer".

### TECHNICAL FIELD

The present disclosure relates to the technical field of kitchen household appliances and cooking appliances, in particular to a top-visible air fryer.

### BACKGROUND

Traditional air fryers are mostly small in volume, and have only one cooking chamber and one frying basket due to volume limitations, resulting in less cookable food and low cooking efficiency. In addition, many air fryers have an air frying system arranged at a top of the cooking chamber, making it difficult to see the top of the cooking chamber. When cooking food, users cannot observe a cooking status of the food inside the cooking chamber and can only rely on experience to judge whether the food is fully cooked, which is prone to leading to poor cooking effect of the food and poor user experience.

### SUMMARY

In a first aspect, the present invention provides a top-visible air fryer, including a fryer body, internally provided with a cooking chamber with a top opening, wherein an inner transparent plate for closing the top opening is arranged at the top opening; a decorative ring, arranged above the top opening, wherein a viewing window corresponding to the top opening is arranged in a middle of the decorative ring, and a visible panel is arranged at an upper opening of the viewing window; and a heat insulation ring, arranged between the top opening and the decorative ring, wherein an open pore corresponding to the top opening is arranged in a middle of the heat insulation ring, a lower side of the heat insulation ring is connected to the fryer body, and an upper side of the heat insulation ring is connected to a lower side of the decorative ring.

Further, a top of the cooking chamber is provided with an air duct plate and an upper core which enclose the top opening, the upper core is located above the air duct plate, and a periphery of the inner transparent plate is adapted to be pressed and fixed to the air duct plate by the upper core.

Further, an outer edge of the inner transparent plate is sleeved with a sealing ring made of an elastic high-temperature resistant material, and the inner transparent plate is adapted to be in close fit with the air duct plate and the upper core through the sealing ring.

Further, the heat insulation ring is arranged above the upper core, one of the heat insulation ring and the upper core is provided with a plurality of first spigot portions, the other of the heat insulation ring and the upper core is provided with a plurality of first spigot grooves, and the heat insulation ring is adapted to be connected to a spigot of the upper core through the first spigot portions and the first spigot grooves.

Further, one of the decorative ring and the heat insulation ring is provided with a plurality of second spigot portions, the other of the decorative ring and the heat insulation ring is provided with a plurality of second spigot grooves, and the decorative ring is adapted to be connected to a spigot of the heat insulation ring through the second spigot portions and the second spigot grooves.

In some embodiments, the heat insulation ring is adapted to be made of a high-temperature resistant heat-insulation material; further, the inner transparent plate is adapted to be made of a high-temperature resistant transparent material.

Further, the decorative ring is of a trumpet shaped structure with an upward opening, a middle channel of the decorative ring forms the viewing window, and a lower opening of the viewing window corresponds to the top opening.

Further, the visible panel is adapted to be of a bevel structure that slopes in a direction from one side of the visible panel to the other side.

In some embodiments, an outer edge of the top opening of the cooking chamber is provided with a heating tube arranged around the top opening, and the heating tube is a light wave tube; further: the outer edge of the top opening is further provided with a light guide enclosure, the heating tube is arranged on an outer side of the light guide enclosure, and light generated by the heating tube is adapted to be guided by the light guide enclosure towards a bottom direction of the cooking chamber.

Further, an exterior of a rear side of the cooking chamber is provided with a hot air chamber communicating with the cooking chamber, and a fan component arranged in the hot air chamber for driving an airflow to flow into the cooking chamber; the cooking chamber is internally provided with a plurality of frying baskets that are able to be withdrawn through side openings, the plurality of frying baskets are open in top, and ventilation openings are formed in inner walls of the frying baskets; an outer side of a rear part of the cooking chamber is further provided with an installation chamber and a driving system arranged in the installation chamber, and the driving system is adapted to extend into the hot air chamber and be in driving connection with the fan component; a heating component is arranged on an airflow flowing path of the fan component; and the visible panel is adapted to at least partially overlap with a projection of each frying basket on a top wall of the cooking chamber.

Further, the cooking chamber includes a first cooking chamber and a second cooking chamber which are arranged in parallel and independently, the frying baskets include a first frying basket and a second frying basket, the first frying basket and the second frying basket are adapted to be respectively arranged in the first cooking chamber and the second cooking chamber, a heating chamber is arranged above the first cooking chamber and the second cooking chamber, the heating chamber is internally provided with the heating component, the heating component is at least partially located above the first cooking chamber and the second cooking chamber, the hot air chamber includes a first hot air chamber and a second hot air chamber which communicate with the heating chamber and are arranged in parallel, and the first hot air chamber and the second hot air chamber respectively communicate with the first cooking chamber and the second cooking chamber; further one visible panel is provided, and the visible panel is adapted to at least partially overlap with projections of the first frying basket and the second frying basket on the top wall of the cooking chamber respectively; or the visible panel includes a first visible panel and a second visible panel which are respectively located above the first frying basket and the second frying basket, the first visible panel at least partially overlaps with the projection of the first frying basket on the top wall of the cooking chamber, and the second visible panel at least partially overlaps with the projection of the second frying basket on the top wall of the cooking chamber.

Further, one cooking chamber is provided, the frying baskets include a first frying basket and a second frying basket, the first frying basket and the second frying basket are arranged in the cooking chamber in parallel, a top of the cooking chamber is provided with the heating component, the heating component is at least partially located over the first frying basket and the second frying basket, the hot air chamber includes a first hot air chamber and a second hot air chamber which are arranged in parallel, the first hot air chamber and the second hot air chamber correspond to the first frying basket and the second frying basket respectively, one visible panel is provided, and the visible panel is adapted to at least partially overlap with projections of the first frying basket and the second frying basket on the top wall of the cooking chamber respectively.

Further, one cooking chamber is provided, the frying baskets include a first frying basket and a second frying basket, the first frying basket and the second frying basket are arranged in the cooking chamber in parallel, a top of the cooking chamber is provided with the heating component, the heating component is at least partially located over the first frying basket and the second frying basket, one hot air chamber is provided, the hot air chamber at least partially corresponds to the first frying basket and the second frying basket, one visible panel is provided, and the visible panel is adapted to at least partially overlap with projections of the first frying basket and the second frying basket on the top wall of the cooking chamber. Further, a heat dissipation channel is arranged in the fryer body, the heat dissipation channel is adapted to communicate with atmosphere and arranged around the cooking chamber, the heat dissipation channel is internally provided with a heat dissipation component for generating a heat dissipation cold flow, and the heat insulation ring is at least partially located in the heat dissipation channel; further: the heat dissipation component is adapted to be arranged adjacent to the heat insulation ring. In some embodiments, the heating component includes a heating tube, and the heating tube is a light wave tube; further: the heating tube is adapted to be arranged around an outer edge of the inner transparent plate.

### BRIEF DESCRIPTION OF THE DRAWINGS

In order to illustrate specific implementations of the present disclosure or technical solutions in the prior art more clearly, accompanying drawings needing to be used in description of the specific implementations or the prior art will be introduced below briefly. Apparently, the accompanying drawings in the description below are some implementations of the present disclosure, and those ordinarily skilled in the art can further obtain other accompanying drawings according to these accompanying drawings without inventive efforts.
Fig. 1 is a sectional view of an overall structure of a top-visible air fryer in the present disclosure.
Fig. 2 is an exploded schematic structural diagram of a top-visible air fryer in the disclosure.
Fig. 3 is an enlarged sectional view of a partial structure of a top-visible air fryer in the disclosure.
Fig. 4 is a schematic diagram of an overall structure of a first embodiment of an air fryer in the disclosure.
Fig. 5 is a top sectional view of a first embodiment of an air fryer in the present disclosure.
Fig. 6 is a front sectional view of a first embodiment of an air fryer in the present disclosure.
Fig. 7 is a front sectional view of a second embodiment of an air fryer in the disclosure.
Fig. 8 is a top sectional view of a third embodiment of an air fryer in the present disclosure.
Fig. 9 is a front sectional view of a third embodiment of an air fryer in the present disclosure.
Fig. 10 is a top sectional view of a fourth embodiment of an air fryer in the present disclosure.
Fig. 11 is a front overall sectional view of a fourth embodiment of an air fryer in the present disclosure.

### Description of reference numerals:

10-Fryer body; 11-Cooking chamber; 111-First cooking chamber; 112-Second cooking chamber; 12-Hot air chamber; 121-First hot air chamber; 122-Second hot air chamber; 14-Heating chamber; 15-Heat dissipation channel; 20-Frying basket; 21-First frying basket; 22-Second frying basket; 30-Fan component; 40-Ventilation opening; 50-Driving system; 60-Heating component; 61-Heating tube; 71-First visible panel; 72-Second visible panel; 7111-Top opening; 712-Inner transparent plate; 713-Heat insulation ring; 714-Decorative ring; 7141-Viewing window; 715-Visible panel; 716-Air duct plate; 717-Upper core; 718-Sealing ring; 731-First spigot portion; 732-First spigot groove; 741-Second spigot portion; 742-Second spigot groove; 719-Light guide enclosure; and 80-Heat dissipation component.

### DETAILED DESCRIPTION

The present application provides a top-visible air fryer to solve technical problems of low cooking efficiency, poor visibility, and poor user experience of an existing air fryer.

In order to solve the above technical problems, the present invention is provided to make the objective, technical solutions and advantages of the embodiments of the present disclosure more clear, and the technical solutions in the embodiments of the present disclosure will be described below clearly and completely with reference to the drawings in the embodiments of the present disclosure. Obviously, the described embodiments are part of the embodiments of the present disclosure, but not all the embodiments. The components of the embodiments of the present disclosure, which are generally described and shown in accompanying drawings herein, may be arranged and designed in various different configurations.

Therefore, the following detailed description of the embodiments of the present disclosure provided in the accompanying drawings is not intended to limit the scope of the present disclosure required to be protected, but merely represents selected embodiments of the present disclosure. On the basis of the embodiments in the present disclosure, all other embodiments obtained by those ordinarily skilled in the art without inventive efforts fall within the scope of protection of the present disclosure.

In order to solve the above technical problems, the present invention provides a top-visible air fryer, including a fryer body 10, internally provided with a cooking chamber 11 with a top opening 7111, wherein an inner transparent plate 712 for closing the top opening 7111 is arranged at the top opening 7111; a decorative ring 714, arranged above the top opening 7111, wherein a viewing window 7141 corresponding to the top opening 7111 is arranged in a middle of the decorative ring 714, and a visible panel 715 is arranged at an upper opening of the viewing window 7141; and a heat insulation ring 713, arranged between the top opening 7111 and the decorative ring 714, wherein an open pore corresponding to the top opening 7111 is arranged in a middle of the heat insulation ring 713, a lower side of the heat insulation ring 713 is connected to the fryer body 10, and an upper side of the heat insulation ring is connected to a lower side of the decorative ring 714.

In some embodiments, a top of the cooking chamber 11 is provided with an air duct plate 716 and an upper core 717 which enclose the top opening 7111, the upper core 717 is located above the air duct plate 716, and a periphery of the inner transparent plate 712 is adapted to be pressed and fixed to the air duct plate 716 by the upper core 717.

In some embodiments, an outer edge of the inner transparent plate 712 is sleeved with a sealing ring 718 made of an elastic high-temperature resistant material, and the inner transparent plate 712 is adapted to be in close fit with the air duct plate 716 and the upper core 717 through the sealing ring 718.

In some embodiments, the heat insulation ring 713 is arranged above the upper core 717, one of the heat insulation ring 713 and the upper core 717 is provided with a plurality of first spigot portions 731, the other of the heat insulation ring 713 and the upper core 717 is provided with a plurality of first spigot grooves 732, and the heat insulation ring 713 is adapted to be connected to a spigot of the upper core 717 through the first spigot portions 731 and the first spigot grooves 732.

In some embodiments, one of the decorative ring 714 and the heat insulation ring 713 is provided with a plurality of second spigot portions 741, the other of the decorative ring 714 and the heat insulation ring 713 is provided with a plurality of second spigot grooves 742, and the decorative ring 714 is adapted to be connected to a spigot of the heat insulation ring 713 through the second spigot portions 741 and the second spigot grooves 742.

In some embodiments, the heat insulation ring 713 is adapted to be made of a high-temperature resistant heat-insulation material.

In some embodiments, the decorative ring 714 is of a trumpet shaped structure with an upward opening, a middle channel of the decorative ring forms the viewing window 7141, and a lower opening of the viewing window 7141 corresponds to the top opening 7111.

In some embodiments, the visible panel 715 is adapted to be of a bevel structure that slopes in a direction from one side of the visible panel 715 to the other side.

In some embodiments, an outer edge of the top opening 7111 of the cooking chamber 11 is provided with a heating tube 61 arranged around the top opening, and the heating tube 61 is a light wave tube.

In some embodiments, the outer edge of the top opening 7111 is further provided with a light guide enclosure 719, the heating tube 61 is arranged on an outer side of the light guide enclosure 719, and light generated by the heating tube 61 is adapted to be guided by the light guide enclosure 719 towards a bottom direction of the cooking chamber 11.

In some embodiments, an exterior of a rear side of the cooking chamber 11 is provided with a hot air chamber 12 communicating with the cooking chamber 11, and a fan component 30 arranged in the hot air chamber 12 for driving an airflow to flow into the cooking chamber 11; the cooking chamber 11 is internally provided with a plurality of frying baskets 20 that are able to be withdrawn through side openings, the plurality of frying baskets 20 are open in top, and ventilation openings 40 are formed in inner walls of the frying baskets; an outer side of a rear part of the cooking chamber 11 is further provided with an installation chamber 13 and a driving system 50 arranged in the installation chamber 13, and the driving system 50 is adapted to extend into the hot air chamber 12 and be in driving connection with the fan component 30; a heating component 60 is arranged on an airflow flowing path of the fan component 30; and the visible panel 715 is adapted to at least partially overlap with a projection of each frying basket 20 on a top wall of the cooking chamber 11.

In some embodiments, the cooking chamber 11 includes a first cooking chamber 111 and a second cooking chamber 112 which are arranged in parallel and independently, the frying baskets 20 include a first frying basket 21 and a second frying basket 22, the first frying basket 21 and the second frying basket 22 are adapted to be respectively arranged in the first cooking chamber 111 and the second cooking chamber 112, a heating chamber 14 is arranged above the first cooking chamber 111 and the second cooking chamber 112, the heating chamber 14 is internally provided with the heating component 60, the heating component 60 is at least partially located above the first cooking chamber 111 and the second cooking chamber 112, the hot air chamber 12 includes a first hot air chamber 121 and a second hot air chamber 122 which communicate with the heating chamber 12 and are arranged in parallel, and the first hot air chamber 121 and the second hot air chamber 122 respectively communicate with the first cooking chamber 111 and the second cooking chamber 112.

In some embodiments, one visible panel 715 is provided, and the visible panel 715 is adapted to at least partially overlap with projections of the first frying basket 21 and the second frying basket 22 on the top wall of the cooking chamber 11 respectively; or the visible panel 715 includes a first visible panel 71 and a second visible panel 72 which are respectively located above the first frying basket 21 and the second frying basket 22, the first visible panel 71 at least partially overlaps with the projection of the first frying basket 21 on the top wall of the cooking chamber 11, and the second visible panel 72 at least partially overlaps with the projection of the second frying basket 22 on the top wall of the cooking chamber 11.

In some embodiments, one cooking chamber 11 is provided, the frying baskets 20 include a first frying basket 21 and a second frying basket 22, the first frying basket 21 and the second frying basket 22 are arranged in the cooking chamber 11 in parallel, a top of the cooking chamber 11 is provided with the heating component, the heating component 60 is at least partially located over the first frying basket 21 and the second frying basket 22, the hot air chamber 12 includes a first hot air chamber 121 and a second hot air chamber 122 which are arranged in parallel, the first hot air chamber 121 and the second hot air chamber 122 correspond to the first frying basket 21 and the second frying basket 22 respectively, one visible panel 715 is provided, and the visible panel 715 is adapted to at least partially overlap with projections of the first frying basket 21 and the second frying basket 22 on the top wall of the cooking chamber 11 respectively.

In some embodiments, one cooking chamber 11 is provided, the frying baskets 20 include a first frying basket 21 and a second frying basket 22, the first frying basket 21 and the second frying basket 22 are arranged in the cooking chamber 11 in parallel, a top of the cooking chamber 11 is provided with the heating component 60, the heating component 60 is at least partially located over the first frying basket 21 and the second frying basket 22, one hot air chamber 12 is provided, the hot air chamber 12 at least partially corresponds to the first frying basket 21 and the second frying basket 22, one visible panel 715 is provided, and the visible panel 715 is adapted to at least partially overlap with projections of the first frying basket 21 and the second frying basket 22 on the top wall of the cooking chamber 11 respectively.

In some embodiments, the inner transparent plate 712 is adapted to be made of a high-temperature resistant transparent material.

In some embodiments, a heat dissipation channel 15 is arranged in the fryer body 10, the heat dissipation channel 15 is adapted to communicate with atmosphere and arranged around the cooking chamber 11, the heat dissipation channel 15 is internally provided with a heat dissipation component 80 for generating a heat dissipation cold flow, and the heat insulation ring 713 is at least partially located in the heat dissipation channel.

In some embodiments, the heat dissipation component 80 is adapted to be arranged adjacent to the heat insulation ring 713.

In some embodiments, the heating component 60 includes a heating tube 61, and the heating tube 61 is a light wave tube.

In some embodiments, the heating tube 61 is adapted to be arranged around an outer edge of the inner transparent plate 712.

Compared with the prior art, beneficial effects of the present application are as follows:
by arranging the top opening at the top of the cooking chamber and arranging the inner transparent plate for closing the top opening at the top opening, the present application may achieve visibility of a situation inside the cooking chamber, so that a user can better cook the food inside the cooking chamber, thereby effectively improving a cooking effect and user cooking experience; and at the same time, by arranging the heat insulation ring for separating the inner transparent plate and the visible panel as well as the decorative ring connected to the heat insulation ring above the top opening, the present application may achieve an increase in a distance between the visible panel and the inner transparent plate, so that there is a sufficient heat radiation buffering space between the inner transparent plate and the visible panel, so as to avoid burning to the user caused by direct heat transfer of a high temperature in the cooking chamber to the visible panel, thereby effectively improving use safety and use experience of the user.

By arranging the plurality of frying baskets in the cooking chamber, the present application achieves not only simultaneous cooking of different foods, but also simultaneous cooking of a large amount of food, thereby effectively improving the cooking efficiency; and at the same time, by arranging the visible panel on the top of the fryer body, not only can a user intuitively observe a cooking status of the food inside the cooking chamber, thereby improving user cooking experience and cooking enjoyment, but also can facilitate food cooking of the user, thereby improving a food cooking effect.

In order to make the objective, technical solutions and advantages of the embodiments of the present disclosure more clear, the technical solutions in the embodiments of the present disclosure will be described below clearly and completely with reference to the accompanying drawings in the embodiments of the present disclosure. Obviously, the described embodiments are part of the embodiments of the present disclosure, but not all the embodiments. The components of the embodiments of the present disclosure, which are generally described and shown in accompanying drawings herein, may be arranged and designed in various different configurations.

Therefore, the following detailed description of the embodiments of the present disclosure provided in the accompanying drawings is not intended to limit the scope of the present disclosure required to be protected, but merely represents selected embodiments of the present disclosure. On the basis of the embodiments in the present disclosure, all other embodiments obtained by those ordinarily skilled in the art without inventive efforts fall within the scope of protection of the present disclosure.

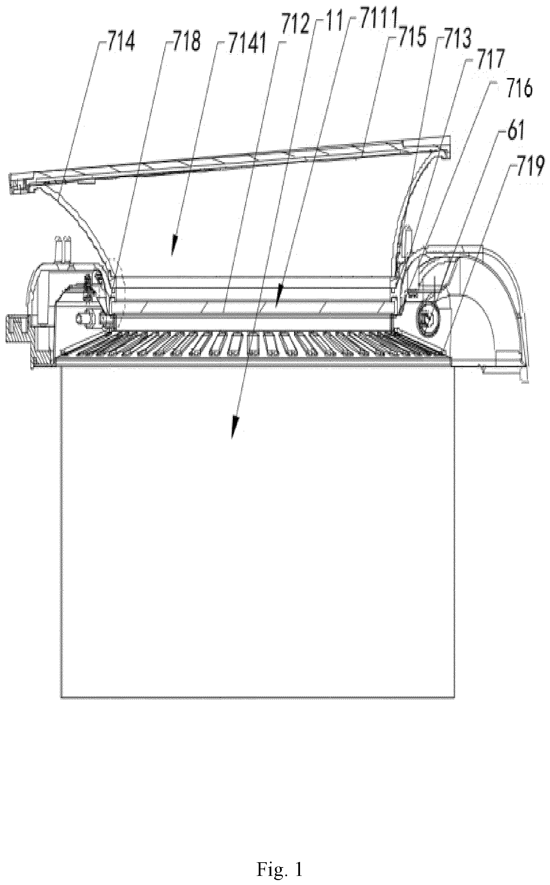

As an embodiment, as shown in Fig. 1 to Fig. 3, a top-visible air fryer includes a fryer body 10, a cooking chamber 11 arranged inside the fryer body 10, and a hot air circulation system communicating with the cooking chamber 11. The cooking chamber 11 is adapted to place food to be cooked, and the hot air circulation system is adapted to generate a circulating heat flow and introducing the circulating heat flow into the cooking chamber 11 to heat food inside the cooking chamber 11.

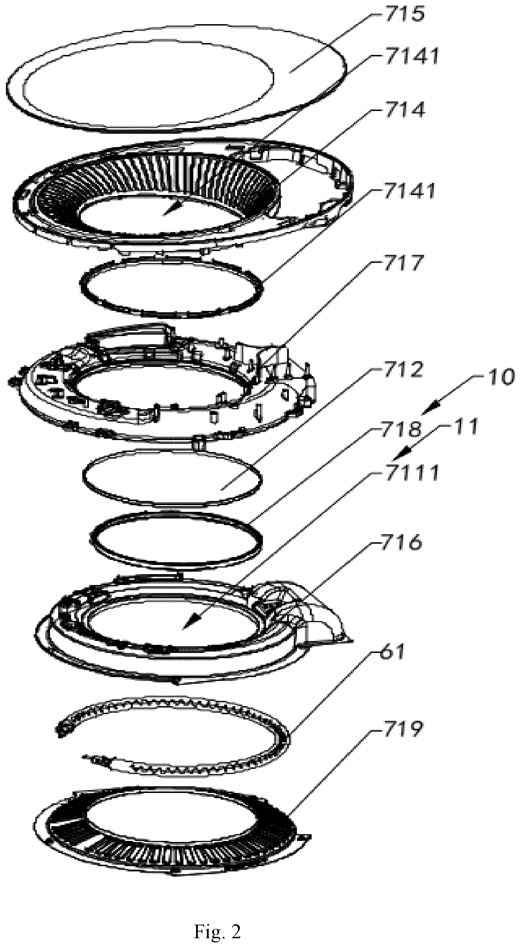

As shown in Fig. 1 and Fig. 2, a top of the cooking chamber 11 is provided with a top opening 7111, an inner transparent plate 712 for closing the top opening 7111 is arranged at the top opening 7111, and the inner transparent plate 712 is preferably made of high-temperature resistant transparent materials such as high-temperature resistant transparent glass and high-temperature resistant transparent plastic. By using the high-temperature resistant transparent material to make the inner transparent plate 712, it may be ensured that its own performance is not affected by the high temperature inside the cooking chamber 11 while achieving visibility, and stability and reliability of the performance of the inner transparent plate 712 are effectively ensured.

As shown in Fig. 1 and Fig. 2, a heat insulation ring 713 and a decorative ring 714 are further arranged above the top opening 7111. The heat insulation ring 713 is adapted to be arranged between the top opening 7111 and the decorative ring 714, an open pore corresponding to the top opening 7111 is arranged in a middle of the heat insulation ring 713, a lower side of the heat insulation ring 713 is connected to the fryer body 10, and an upper side of the heat insulation ring is connected to a lower side of the decorative ring 714; and a viewing window 7141 corresponding to the top opening 7111 is arranged in a middle of the decorative ring 714, and a visible panel 715 for closing the viewing window 7141 is arranged at an upper opening of the viewing window 7141. The visible panel 715 is made entirely or partially of a transparent material such as transparent glass and transparent plastic. By using the transparent material to make the visible panel, the visibility of the situation inside the cooking chamber 11 can be effectively ensured. By arranging the top opening 7111 at the top of the cooking chamber 11 and arranging the inner transparent plate 712 for closing the top opening 7111 at the top opening 111, the air fryer may achieve visibility of a situation inside the cooking chamber 11, so that a user can intuitively observe a cooking condition of food inside the cooking chamber 11, thereby better cooking the food inside the cooking chamber 11, and effectively improving a cooking effect and user cooking experience; and at the same time, by arranging the heat insulation ring 713 for separating the inner transparent plate 712 and the visible panel 715 as well as the decorative ring 714 connected to the heat insulation ring 713 above the top opening 7111, the air fryer may achieve an increase in a distance between the visible panel 715 and the inner transparent plate 712, so that there is a sufficient heat radiation buffering space between the inner transparent plate 712 and the visible panel 715, so as to avoid burning to the user caused by direct heat transfer of a high temperature in the cooking chamber 11 to the visible panel 715,thereby effectively improving use safety and use experience of the user.

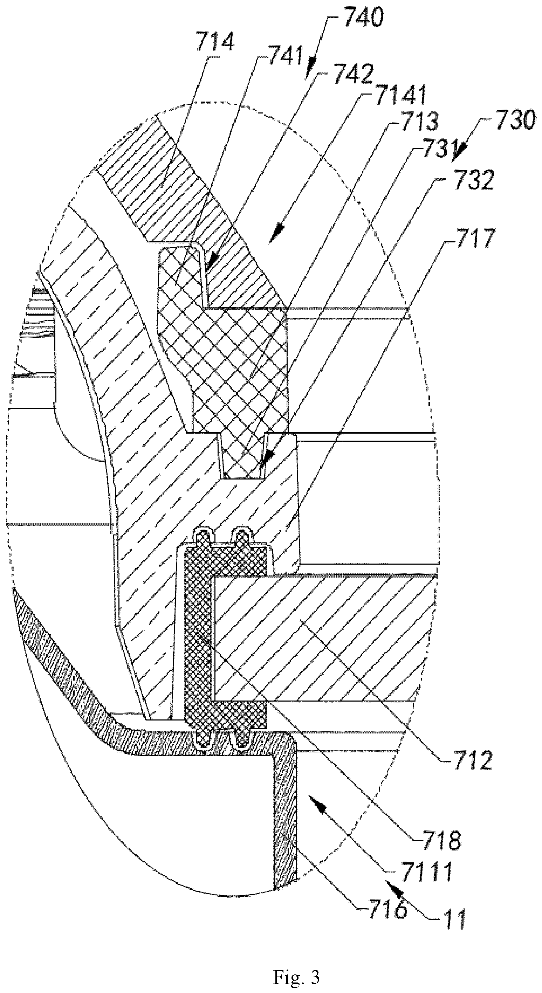

As shown in Fig. 1 and Fig. 3, a top of the cooking chamber 11 is provided with an air duct plate 716 and an upper core 717 which enclose the top opening 7111, the upper core 717 is located above the air duct plate 716, and a periphery of the inner transparent plate 712 is adapted to be pressed and fixed to the air duct plate 716 by the upper core 717. In the air fryer, the inner transparent plate 712 is directly pressed and fixed to the air duct plate 716 through the upper core 717, which not only effectively reduces difficulty of disassembling and installing the inner transparent plate 712, but also reducing the number of parts required to fix the inner transparent plate 712 while ensuring connection stability, thereby reducing production costs and use costs.

As shown in Fig. 2 and Fig. 3, an outer edge of the inner transparent plate 712 is sleeved with a sealing ring 718 made of an elastic high-temperature resistant material such as rubber and silica gel, and the inner transparent plate 712 is adapted to be in close fit with the air duct plate 716 and the upper core 717 through the sealing ring 718. The sealing ring 718 is adapted to play a role in sealing. By sleeving the sealing ring 718 on the outer edge of the inner transparent plate 712 to make the inner transparent plate be in close fit with the air duct plate 716 and the upper core 717, a situation that a circulating heat flow in the cooking chamber 11 flows out to affect cooking efficiency can be effectively avoided, and a situation that the circulating heat flow in the cooking chamber 11 flows out to other positions of the fryer body 10 to affect normal operation of electrical devices inside the fryer body can further be avoided. Meanwhile, by using the elastic high-temperature resistant material to make the sealing ring 718, the influence of high-temperature heat transfer inside the cooking chamber 11 on the sealing ring 718 can be avoided, thereby effectively ensuring sealing performance of the sealing ring 718.

As shown in Fig. 3, the heat insulation ring 713 is arranged above the upper core 717, a first spigot structure 730 is arranged between the heat insulation ring 713 and the upper core 717, the first spigot structure 730 includes a plurality of first spigot portions 731 and first spigot grooves 732 that are matched with the first spigot portions 731, one of the heat insulation ring 713 and the upper core 717 is provided with the plurality of first spigot portions 731, the other of the heat insulation ring 713 and the upper core 717 is provided with the plurality of first spigot grooves 732, and the heat insulation ring 713 is adapted to be connected to a spigot of the upper core 717 through the first spigot portions 731 and the first spigot grooves 732. By connecting the heat insulation ring 713 with the spigot of the upper core 717, not only are disassembly and installation facilitated, but also a connection structure can be simplified, and the number of parts required for connection can be reduced, thereby reducing production costs and use costs.

As shown in Fig. 3, a second spigot structure 740 is arranged between the decorative ring 714 and the heat insulation ring 713, the second spigot structure 740 includes a plurality of second spigot portions 741 and second spigot grooves 742 that are matched with the second spigot portions 741, one of the decorative ring 714 and the heat insulation ring 713 is provided with the plurality of second spigot portions 741, the other of the decorative ring 714 and the heat insulation ring 713 is provided with the plurality of second spigot grooves 742, and the decorative ring 714 is adapted to be connected to a spigot of the heat insulation ring 713 through the second spigot portions 741 and the second spigot grooves 742. By connecting the heat insulation ring 713 with the spigot of the decorative ring 714, not only are disassembly and installation of the air fryer facilitated, but also a connection structure can be simplified, and the number of parts required for connection can be reduced, thereby reducing production costs and use costs.

In an optional embodiment, the heat insulation ring 713 is adapted to be made of a high-temperature resistant heat-insulation material such as heat insulation ceramic, an XPS extrusion material, and high-temperature alloy. By using the high-temperature resistant heat-insulation material to make the heat insulation ring 713, not only can the performance of the heat insulation ring 713 be avoided from being affected by high-temperature heat transfer, but also effective heat insulation can be performed, thereby preventing the high temperature in the cooking chamber 11 from being transferred to the decorative ring 714 and affecting the performance of the decorative ring 714.

As shown in Fig. 1 and Fig. 2, the decorative ring 714 is preferably of a trumpet shaped structure with an upward opening, a middle channel of the decorative ring is adapted to form the viewing window 7141, and a lower opening of the viewing window 7141 corresponds to the top opening 7111. By arranging the decorative ring 714 as the trumpet shaped structure with the upward opening, a volume of a heat radiation buffering space between the visible panel 715 and the inner transparent plate 712 can be effectively increased while ensuring the visible effect, thereby improving a heat insulation effect.

As shown in Fig. 1 and Fig. 2, the visible panel 715 is adapted to be of a bevel structure that slopes in a direction from one side of the visible panel 715 to the other side. By arranging the visible panel 715 as the bevel structure that slopes from one side to the other side, a situation that external liquid, dust, and other impurities are accumulated on the visible panel 15 and thus affect the visibility and overall aesthetics of the air fryer can be avoided, thereby effectively improving the use experience of the user.

As shown in Fig. 1 and Fig. 2, the hot air circulation system includes a heating tube 61 and a heat circulation fan. The heating tube 61 is adapted to heat air inside the cooking chamber 11, and the heat circulation fan is adapted to drive heated air to cyclically flow so as to form a circulating heat flow, thereby heating the food inside the cooking chamber 11. In an optional embodiment, the heating tube 61 is adapted to be arranged around the outer edge of the top opening 7111 of the cooking chamber 11, and the heating tube 61 is preferably a light wave tube. By arranging the heating tube 61 as the light wave tube on the outer edge of the top opening 7111, the air fryer can illuminate the interior of the cooking chamber 11 while heating the air inside the cooking chamber 11, thereby improving the visibility and the visible effect inside the cooking chamber 11.

As shown in Fig. 1 and Fig. 2, the outer edge of the top opening 7111 is further provided with a light guide enclosure 719, the heating tube 61 is arranged on an outer side of the light guide enclosure 719, and light generated by the heating tube 61 is adapted to be guided by the light guide enclosure 719 towards a bottom direction of the cooking chamber 11. The light guide enclosure 719 is adapted to play a role in guiding and blocking light. By arranging the light guide enclosure 719 on the outer edge of the top opening 7111, it can not only block part of the light generated by the heating tube 61 and prevent the light generated by the heating tube 61 from affecting the visibility of the top opening 111, but also guide the light generated by the heating tube 61 towards a bottom direction of the cooking chamber 11 so as to illuminate the interior of the cooking chamber 11, thereby further improving the visibility and the visible effect inside the cooking chamber 11.

### Embodiment 1:

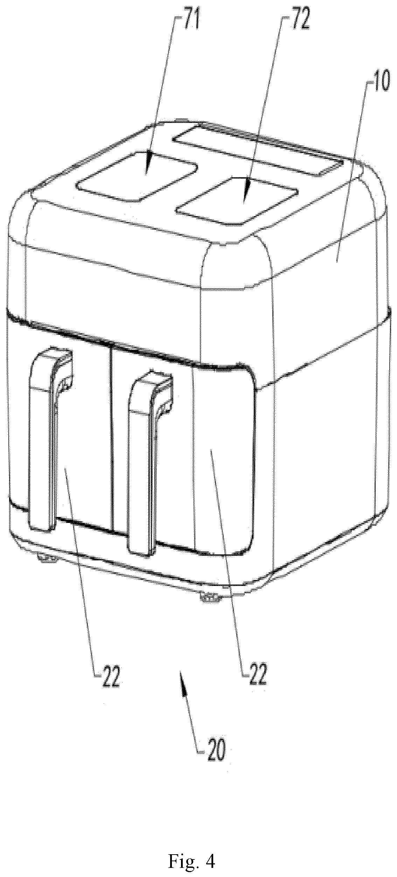

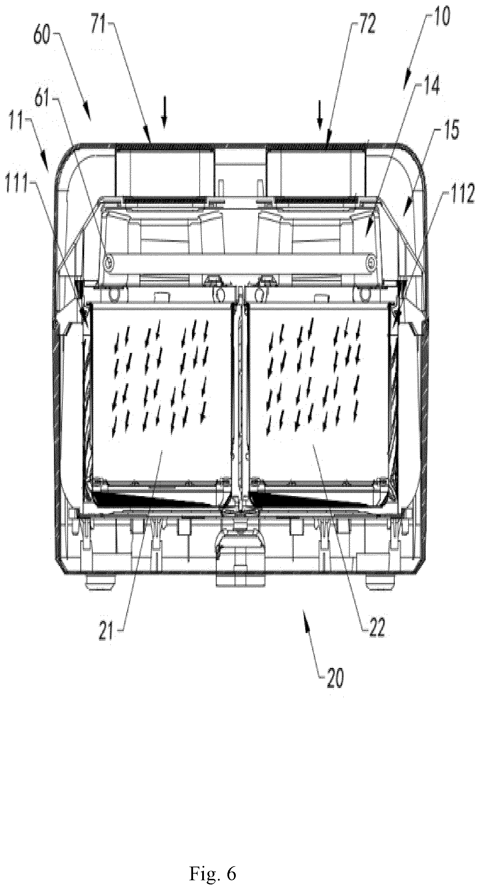

Fig. 4 to Fig. 6 show a schematic diagram of a first embodiment of a top-visible air fryer provided by the present utility model. The air fryer includes a fryer body 10 and frying baskets 20, the fryer body 10 has a cooking chamber 11 with a front-side opening, the cooking chamber 11 is internally provided with the plurality of frying baskets 20 that are able to be withdrawn, an exterior of a rear side of the cooking chamber 11 is provided with a hot air chamber 12 communicating with the cooking chamber 11, and a fan component 30 arranged in the hot air chamber 12 for driving an airflow to flow, and the fan component 30 is adapted to drive the airflow to flow so as to generate a circulating airflow and introduce the circulating airflow into the cooking chamber 11; the frying baskets 20 have top openings, and ventilation openings 40 are formed in inner walls of the frying baskets, and the airflow generated by the fan component 30 enters the cooking chamber 11 and then is adapted to enter and exit the frying baskets 20 through the ventilation openings 40; an outer side of a rear part of the cooking chamber 11 is further provided with an installation chamber 13 and a driving system 50 arranged in the installation chamber 13, the driving system 50 is adapted to extend into the hot air chamber 12 and be in driving connection with the fan component 30, thereby driving the fan component 30 to rotate to generate a circulating airflow; and a heating component 60 is arranged on an airflow flowing path of the fan component 30, the heating component 60 is adapted to heat air inside the cooking chamber 11, the heating component 60 may be in cooperation with the fan component 30 to generate a circulating heat flow, and food inside the frying baskets 20 can be heated through circulating flow of the circulating heat flow in the cooking chamber 11. By arranging the plurality of frying baskets 20 in the cooking chamber 11, the air fryer can achieve not only simultaneous cooking of different foods, but also simultaneous cooking of a large amount of food, thereby effectively improving cooking efficiency. In addition, a top of the fryer body 10 is further provided with a visible panel 715, and the visible panel 715 is adapted to at least partially overlap with a projection of each frying basket 20 on the top wall of the cooking chamber 11. By arranging the visible panel 715 on the top of the fryer body 10, not only can a user intuitively observe a cooking status of the food inside the cooking chamber 11, thereby improving user cooking experience and cooking enjoyment, also can facilitate food cooking of the user, thereby improving food cooking effect. Specifically, as shown in Fig. 4 to Fig. 6, the cooking chamber 11 preferably includes a first cooking chamber 111 and a second cooking chamber 112 which are arranged in parallel and independently, the frying baskets 20 include a first frying basket 21 and a second frying basket 22, the first frying basket 21 and the second frying basket 22 are adapted to be respectively arranged in the first cooking chamber 111 and the second cooking chamber 112, a heating chamber 14 is arranged above the first cooking chamber 111 and the second cooking chamber 112, the heating chamber 14 is internally provided with the heating component 60, and the heating component 60 is at least partially located above the first cooking chamber 111 and the second cooking chamber 112; and the hot air chamber 12 includes a first hot air chamber 121 and a second hot air chamber 122 which communicate with the heating chamber 14 and are arranged in parallel, and the first hot air chamber 121 and the second hot air chamber 122 are adapted to respectively communicate with the first cooking chamber 111 and the second cooking chamber 112; and circulating airflows generated by the first hot air chamber 121 and the second hot air chamber 122 are adapted to flow into the first cooking chamber 111 and the second cooking chamber 112 respectively and then be heated by the heating component 60 to form a circulating heat flow, and the circulating heat flow enters the first frying basket 21 and the second frying basket 22 through the top openings of the first frying basket 21 and the second frying basket 22 and the ventilation openings 40 so as to heat food inside the first frying basket 21 and the second frying basket 22. According to the air fryer, by arranging the parallel and independent first cooking chamber 111 and second cooking chamber 112 inside the fryer body 10, and arranging the first frying basket 21 and the second frying basket 22 inside the first cooking chamber 111 and the second cooking chamber 112, it not only enables the air fryer to cook different foods simultaneously, also ensures that different foods are not tainted by other odor, thereby greatly improving the cooking efficiency and the cooking effect. As shown in Fig. 4 and Fig. 6, in the air fryer, the visible panel 715 preferably includes a first visible panel 71 and a second visible panel 72 which are respectively located above the first frying basket 21 and the second frying basket 22, the first visible panel 71 at least partially overlaps with a projection of the first frying basket 21 on a top wall of the first cooking chamber 111, and the second visible panel 72 at least partially overlaps with a projection of the second frying basket 22 on a top wall of the second cooking chamber 112. By respectively arranging the corresponding first visible panel 71 and second visible panel 72 above the first frying basket 21 and the second frying basket 22, separate visibility of the first frying basket 21 and the second frying basket 22 can be achieved, thus effectively improving visible effect.

As shown in Fig. 6, the inner transparent plate 712 is adapted to be made of a high-temperature resistant transparent material. The influence of the high temperature inside the cooking chamber 11 on performance of the inner transparent plate 712 can be avoided, thereby improving performance stability and structural reliability of the visible panel 715.

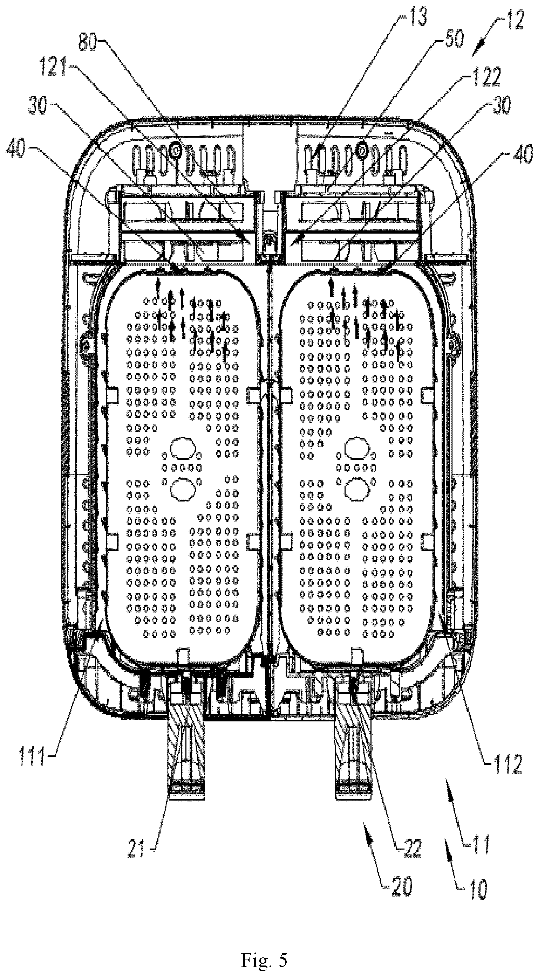

As shown in Fig. 5 and Fig. 6, a heat dissipation channel 15 is further arranged in the fryer body 10, the heat dissipation channel 15 is adapted to communicate with atmosphere and arranged around the cooking chamber 11, the heat dissipation channel 15 is internally provided with a heat dissipation component 80 for generating a heat dissipation cold flow, and the heat insulation ring 713 is at least partially located in the heat dissipation channel 15. By arranging the heat dissipation channel 15 surrounding the cooking chamber 11 in the fryer body 10 and at least partially arranging the heat insulation ring 713 in the heat dissipation channel 15, not only can heat dissipation of the cooking chamber 11 be achieved, but also cooling of the visible panel 715 can be achieved, thereby further improving the performance stability and the structural reliability of the visible panel 715.

In an optional embodiment, the heat dissipation component 80 is adapted to be arranged adjacent to the heat insulation ring 713. By arranging the heat dissipation component 80 adjacent to the heat insulation ring 713, the heat dissipation cold flow can better dissipate heat from the heat insulation ring 713, thereby improving a heat dissipation effect of the heat insulation ring 713.

As shown in Fig. 6, the heating component 60 includes a heating tube 61, and the heating tube 61 is preferably a light wave tube. By using the light wave tube as the heating tube 61, the heating tube 61 can not only heat the air inside the cooking chamber 11, but also illuminate the cooking chamber 11, thereby improving the visibility and the visible effect inside the cooking chamber 11.

As shown in Fig. 6, the heating tube 61 is preferably arranged around an outer edge of the inner transparent plate 712. By arranging the heating tube 61 around the outer edge of the inner transparent plate 712, interference with the visibility of the inner transparent plate 712 caused by the light generated by the heating tube 61 can be avoided, thereby ensuring the visibility of the inner transparent plate 712.

### Embodiment 2:

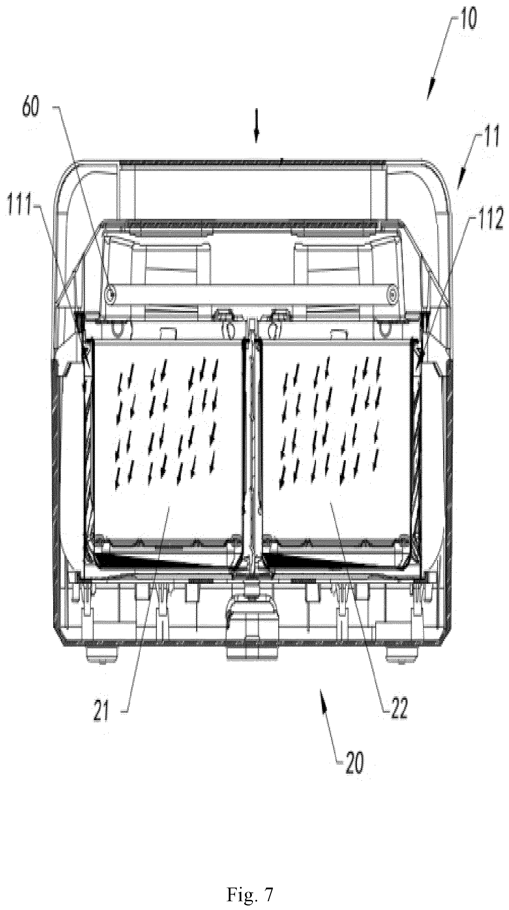

Fig. 7 shows a schematic diagram of a second embodiment of a top-visible air fryer provided by the present utility model. The partial structural features and functions of the air fryer in Embodiment 2 are consistent with those in the air fryer of Embodiment 1, and will not be repeated here. By comparison, the difference between the air fryer in Embodiment 2 and the air fryer in Embodiment 1 is that the visible panel 715 is different.

As shown in Fig. 7, in Embodiment 2, the air fryer includes a fryer body 10 and frying baskets 20. The fryer body 10 has a cooking chamber 11 with a front-side opening, and the cooking chamber 11 is internally provided with the plurality of frying baskets 20 that are able to be withdrawn; and a top of the fryer body 10 is provided with a visible panel 715, and the visible panel 715 is adapted to at least partially overlap with a projection of each frying basket 20 on a top wall of the cooking chamber 11.

Specifically, as shown in Fig. 7, the cooking chamber 11 preferably includes a first cooking chamber 111 and a second cooking chamber 112 which are arranged in parallel and independently, the frying baskets 20 include a first frying basket 21 and a second frying basket 22, and the first frying basket 21 and the second frying basket 22 are adapted to be respectively arranged in the first cooking chamber 111 and the second cooking chamber 112; and the top of the fryer body 10 is provided with one visible panel 715, and the visible panel 715 is adapted to at least partially overlap with projections of the first frying basket 21 and the second frying basket 22 on the top wall of the cooking chamber 11 respectively. By arranging one visible panel 715 inside the fryer body 10 to respectively correspond to the first frying basket 21 and the second frying basket 22, not only can the visibility of the air fryer be achieved, but also an overall structure of the air fryer can be simplified, production costs can be reduced, and use experience of the user can be improved.

### Embodiment 3:

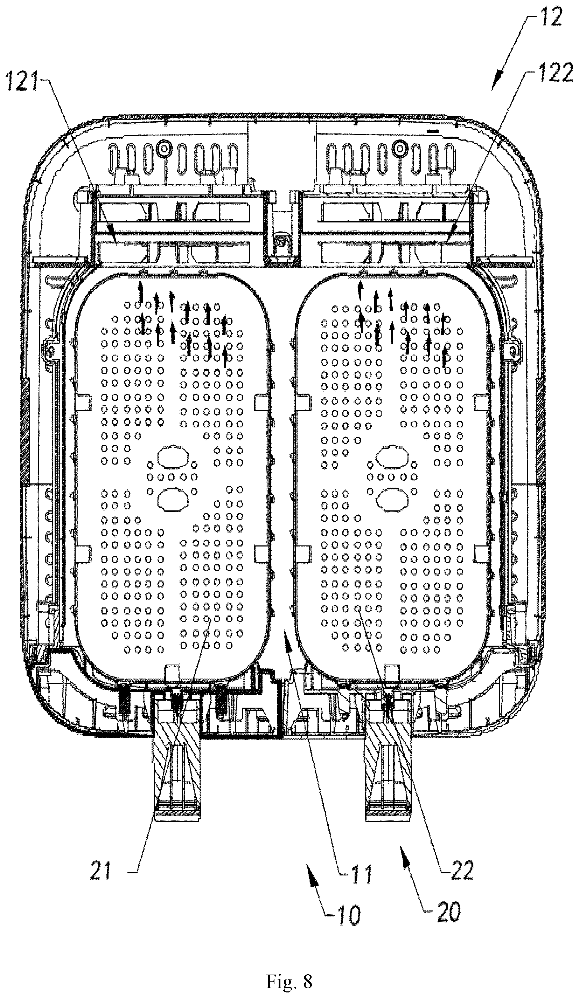

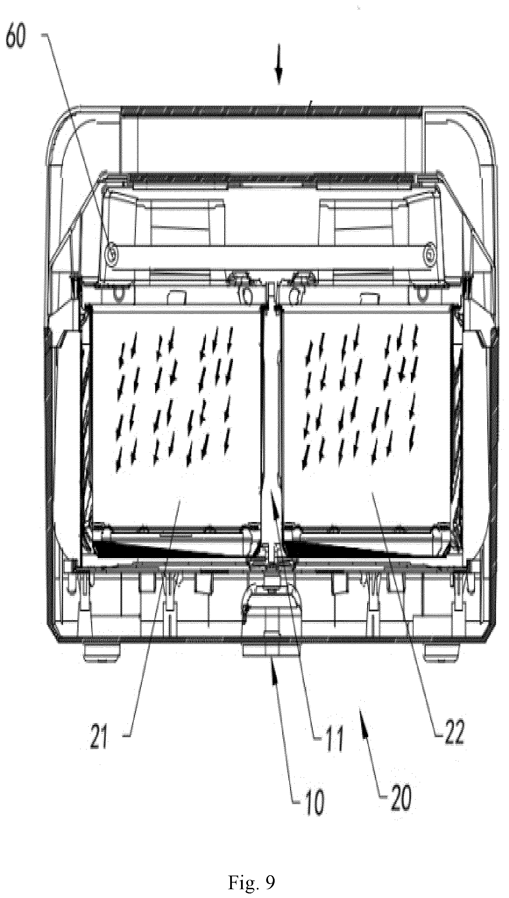

Fig. 8 and Fig. 9 show a schematic diagram of a third embodiment of a top-visible air fryer provided by the present utility model. The partial structural features and functions of the air fryer in Embodiment 3 are consistent with those in the air fryer of Embodiment 1, and will not be repeated here. By comparison, the difference between the air fryer in Embodiment 3 and the air fryer in Embodiment 1 is that the visible panel 715 and a structure of the cooking chamber 11 are different.

As shown in Fig. 8 and Fig. 9, the air fryer in Embodiment 3 includes a fryer body 10 and frying baskets 20. The fryer body 10 has a cooking chamber 11 with a front-side opening, and the cooking chamber 11 is internally provided with the plurality of frying baskets 20 that are able to be withdrawn; and a top of the fryer body 10 is provided with a visible panel 715, and the visible panel 715 is adapted to at least partially overlap with a projection of each frying basket 20 on a top wall of the cooking chamber 11.

Specifically, as shown in Fig. 8, one cooking chamber 11 of the air fryer is provided, the frying baskets 20 includes a first frying basket 21 and a second frying basket 22, the first frying basket 21 and the second frying basket 22 are adapted to be arranged in the cooking chamber 11 in parallel, a top of the cooking chamber 11 is provided with the heating component 60, and the heating component 60 is at least partially located over the first frying basket 21 and the second frying basket 22; and the hot air chamber 12 includes a first hot air chamber 121 and a second hot air chamber 122 which are arranged in parallel, and the first hot air chamber 121 and the second hot air chamber 122 are adapted to correspond to the first frying basket 21 and the second frying basket 22 respectively. By arranging the first hot air chamber 121 and the second hot air chamber 122 on the outer side of the rear part of the cooking chamber to simultaneously supply a circulating airflow to the cooking chamber 11, cooking efficiency can be effectively improved.

In addition, as shown in Fig. 9, in the air fryer in Embodiment 3, one visible panel 715 is provided, and the visible panel 715 is adapted to at least partially overlap with projections of the first frying basket 21 and the second frying basket 22 on the top wall of the cooking chamber 11 respectively. By arranging one visible panel 715 inside the fryer body 10 to respectively correspond to the first frying basket 21 and the second frying basket 22, an overall structure of the air fryer can be simplified simultaneously, production costs can be reduced, and use experience of the user can be improved.

### Embodiment 4:

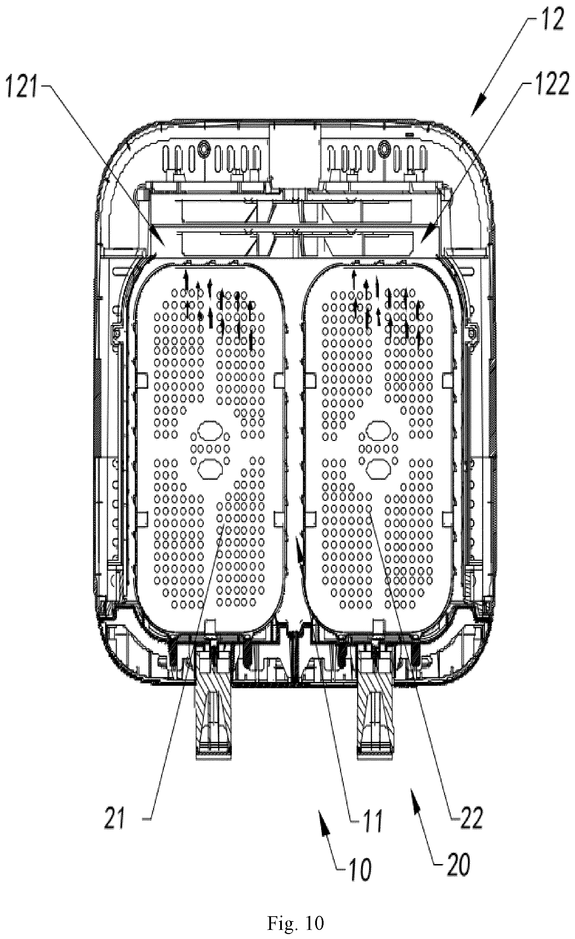

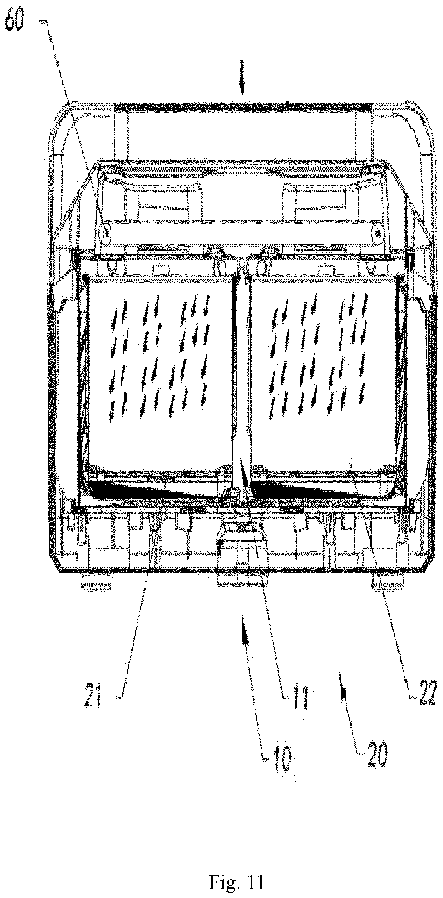

Fig. 10 and Fig. 11 show a schematic diagram of a fourth embodiment of a top-visible air fryer provided by the present utility model. The partial structural features and functions of the air fryer in Embodiment 4 are consistent with those in the air fryer of Embodiment 1, and will not be repeated here.

As shown in Fig. 10 and Fig. 11, the air fryer in Embodiment 4 includes a fryer body 10 and frying baskets 20. The fryer body 10 has a cooking chamber 11 with a front-side opening, and the cooking chamber 11 is internally provided with the plurality of frying baskets 20 that are able to be withdrawn; and a top of the fryer body 10 is provided with a visible panel 715, and the visible panel 715 is adapted to at least partially overlap with a projection of each frying basket 20 on a top wall of the cooking chamber 11.

Specifically, in the air fryer, one cooking chamber 11 is provided, the frying basket 20 includes a first frying basket 21 and a second frying basket 22, the first frying basket 21 and the second frying basket 22 are adapted to be arranged in the cooking chamber 11 in parallel, a top of the cooking chamber 11 is provided with the heating component 60, and the heating component 60 is at least partially located over the first frying basket 21 and the second frying basket 22; one hot air chamber 12 is provided, and the hot air chamber 12 at least partially corresponds to the first frying basket 21 and the second frying basket 22; and one visible panel 715 is provided, and the visible panel 715 is adapted to at least partially overlap with projections of the first frying basket 21 and the second frying basket 22 on the top wall of the cooking chamber 11 respectively. By arranging the single cooking chamber 11 inside the fryer body 10 and arranging the single hot air chamber 12 on an outer side of a rear part of the cooking chamber 11 to supply a circulating airflow to the cooking chamber 11, not only can an overall structure of the air fryer be simplified, but also energy consumption can be reduced while improving cooking efficiency, thereby reducing use costs of a user.

It should be noted that the terms used here is only for describing the specific implementations, rather than limiting an exemplary implementation according to the present disclosure. As used here, unless clearly noted in the context, a singular form also intends to include a plural form. In addition, it should be understood that when terms "include" and/or "comprise" are used in the present specification, it indicates that there are features, steps, operations, devices, components and/or their combinations.

Relative arrangement of components and steps, numerical expressions and numerical values set forth in these embodiments do not limit the scope of the disclosure unless specifically stated otherwise. Meanwhile, it should be understood that, for the convenience of description, dimensions of various parts shown in the accompanying drawings are not drawn in an actual proportional relationship. Technologies, methods, and devices known to those of skill in the related art may not be discussed in detail, but where appropriate, such technologies, methods, and devices should be considered part of the authorized specification. In all the examples shown and discussed here, any specific value should be interpreted as merely illustrative and not restrictive. Therefore, other examples of exemplary embodiments may have different values. It should be noted that similar numerals and letters represent like items in the following accompanying drawings, therefore, once an item is defined in one accompanying drawing, it does not require further discussion in the subsequent accompanying drawings.

The above provides a detailed introduction to the top-visible air fryer provided by the present disclosure. Specific examples are applied in the text to explain principles and implementations of the present disclosure. The description of the above embodiments is merely used for helping understand the methods and core ideas of the present disclosure. Meanwhile, for those ordinarily skilled in the art, there may be changes in specific implementations and application scope according to the ideas of the present disclosure. To sum up, the content of this specification is not to be understood as a limitation on the present disclosure.

### INDUSTRIAL APPLICABILITY

By arranging the plurality of frying baskets in the cooking chamber, this embodiment achieves not only simultaneous cooking of different foods, but also simultaneous cooking of a large amount of food, thereby effectively improving the cooking efficiency; and at the same time, by arranging the visible panel on the top of the fryer body, not only can a user intuitively observe a cooking status of the food inside the cooking chamber, thereby improving user cooking experience and cooking enjoyment, but also can facilitate food cooking of the user, thereby improving a food cooking effect. By arranging the top opening at the top of the cooking chamber and arranging the inner transparent plate for closing the top opening at the top opening, visibility of a situation inside the cooking chamber can be achieved, so that the user can better cook the food inside the cooking chamber, and the cooking effect and the cooking experience are effectively improved.

## Claims

1. A top-visible air fryer, **characterized by** comprising: a fryer body (10), internally provided with a cooking chamber (11) with a top opening (7111), wherein an inner transparent plate (712) for closing the top opening (7111) is arranged at the top opening (7111); a decorative ring (714), arranged above the top opening (7111), wherein a viewing window (7141) corresponding to the top opening (7111) is arranged in a middle of the decorative ring (714), and a visible panel (715) is arranged at an upper opening of the viewing window (7141); and a heat insulation ring (713), arranged between the top opening (7111) and the decorative ring (714), wherein an open pore corresponding to the top opening (7111) is arranged in a middle of the heat insulation ring (713), a lower side of the heat insulation ring (713) is connected to the fryer body (10), and an upper side of the heat insulation ring is connected to a lower side of the decorative ring (714).

2. The top-visible air fryer according to claim 1, **characterized in that** a top of the cooking chamber (11) is provided with an air duct plate (716) and an upper core (717) which enclose the top opening (7111), the upper core (717) is located above the air duct plate (716), and a periphery of the inner transparent plate (712) is adapted to be pressed and fixed to the air duct plate (716) by the upper core (717).

3. The top-visible air fryer according to claim 2, **characterized in that** an outer edge of the inner transparent plate (712) is sleeved with a sealing ring (718) made of an elastic high-temperature resistant material, and the inner transparent plate (712) is adapted to be in close fit with the air duct plate (716) and the upper core (717) through the sealing ring (718).

4. The top-visible air fryer according to claim 2, **characterized in that** the heat insulation ring (713) is arranged above the upper core (717), one of the heat insulation ring (713) and the upper core (717) is provided with a plurality of first spigot portions (731), the other of the heat insulation ring (713) and the upper core (717) is provided with a plurality of first spigot grooves (732), and the heat insulation ring (713) is adapted to be connected to a spigot of the upper core (717) through the first spigot portions (731) and the first spigot grooves (732).

5. The top-visible air fryer according to claim 1, **characterized in that** one of the decorative ring (714) and the heat insulation ring (713) is provided with a plurality of second spigot portions (741), the other of the decorative ring (714) and the heat insulation ring (713) is provided with a plurality of second spigot grooves (742), and the decorative ring (714) is adapted to be connected to a spigot of the heat insulation ring (713) through the second spigot portions (741) and the second spigot grooves (742).

6. The top-visible air fryer according to any one of claims 1 to 5, **characterized in that** the heat insulation ring (713) is adapted to be made of a high-temperature resistant heat-insulation material; further the inner transparent plate (712) is adapted to be made of a high-temperature resistant transparent material.

7. The top-visible air fryer according to any one of claims 1 to 6, **characterized in that** the decorative ring (714) is of a trumpet shaped structure with an upward opening, a middle channel of the decorative ring forms the viewing window (7141), and a lower opening of the viewing window (7141) corresponds to the top opening (7111).

8. The top-visible air fryer according to any one of claims 1 to 7, **characterized in that** the visible panel (715) is adapted to be of a bevel structure that slopes in a direction from one side of the visible panel (715) to the other side.

9. The top-visible air fryer according to any one of claims 1 to 8, **characterized in that** an outer edge of the top opening (7111) of the cooking chamber (11) is provided with a heating tube (61) arranged around the top opening, and the heating tube (61) is a light wave tube; further: the outer edge of the top opening (7111) is further provided with a light guide enclosure (719), the heating tube (61) is arranged on an outer side of the light guide enclosure (719), and light generated by the heating tube (61) is adapted to be guided by the light guide enclosure (719) towards a bottom direction of the cooking chamber (11).

10. The top-visible air fryer according to any one of claims 1 to 9, **characterized in that** an exterior of a rear side of the cooking chamber (11) is provided with a hot air chamber (12) communicating with the cooking chamber (11), and a fan component (30) arranged in the hot air chamber (12) for driving an airflow to flow into the cooking chamber (11); the cooking chamber (11) is internally provided with a plurality of frying baskets (20) that are able to be withdrawn through side openings, the plurality of frying baskets (20) are open in top, and ventilation openings (40) are formed in inner walls of the frying baskets; an outer side of a rear part of the cooking chamber (11) is further provided with an installation chamber (13) and a driving system (50) arranged in the installation chamber (13), and the driving system (50) is adapted to extend into the hot air chamber (12) and be in driving connection with the fan component (30); a heating component (60) is arranged on an airflow flowing path of the fan component (30); and the visible panel (715) is adapted to at least partially overlap with a projection of each frying basket (20) on a top wall of the cooking chamber (11).

11. The top-visible air fryer according to claim 10, **characterized in that** the cooking chamber (11) comprises a first cooking chamber (111) and a second cooking chamber (112) which are arranged in parallel and independently, the frying baskets (20) comprise a first frying basket (21) and a second frying basket (22), the first frying basket (21) and the second frying basket (22) are adapted to be respectively arranged in the first cooking chamber (111) and the second cooking chamber (112), a heating chamber (14) is arranged above the first cooking chamber (111) and the second cooking chamber (112), the heating chamber (14) is internally provided with the heating component (60), the heating component (60) is at least partially located above the first cooking chamber (111) and the second cooking chamber (112), the hot air chamber (12) comprises a first hot air chamber (121) and a second hot air chamber (122) which communicate with the heating chamber (12) and are arranged in parallel, and the first hot air chamber (121) and the second hot air chamber (122) respectively communicate with the first cooking chamber (111) and the second cooking chamber (112); further one visible panel (715) is provided, and the visible panel (715) is adapted to at least partially overlap with projections of the first frying basket (21) and the second frying basket (22) on the top wall of the cooking chamber (11) respectively; or the visible panel (715) comprises a first visible panel (71) and a second visible panel (72) which are respectively located above the first frying basket (21) and the second frying basket (22) , the first visible panel (71) at least partially overlaps with the projection of the first frying basket (21) on the top wall of the cooking chamber (11), and the second visible panel (72) at least partially overlaps with the projection of the second frying basket (22) on the top wall of the cooking chamber (11).

12. The top-visible air fryer according to claim 10, **characterized in that** one cooking chamber (11) is provided, the frying baskets (20) comprise a first frying basket (21) and a second frying basket (22), the first frying basket (21) and the second frying basket (22) are arranged in the cooking chamber (11) in parallel, a top of the cooking chamber (11) is provided with the heating component, the heating component (60) is at least partially located over the first frying basket (21) and the second frying basket (22), the hot air chamber (12) comprises a first hot air chamber (121) and a second hot air chamber (122) which are arranged in parallel, the first hot air chamber (121) and the second hot air chamber (122) correspond to the first frying basket (21) and the second frying basket (22) respectively, one visible panel (715) is provided, and the visible panel (715) is adapted to at least partially overlap with projections of the first frying basket and the second frying basket on the top wall of the cooking chamber respectively.

13. The top-visible air fryer according to claim 10, **characterized in that** one cooking chamber (11) is provided, the frying baskets (20) comprise a first frying basket (21) and a second frying basket (22), the first frying basket (21) and the second frying basket (22) are arranged in the cooking chamber (11) in parallel, a top of the cooking chamber (11) is provided with the heating component (60), the heating component (60) is at least partially located over the first frying basket (21) and the second frying basket (22), one hot air chamber (12) is provided, the hot air chamber (12) at least partially corresponds to the first frying basket (21) and the second frying basket (22), one visible panel (715) is provided, and the visible panel (715) is adapted to at least partially overlap with projections of the first frying basket (21) and the second frying basket (22) on the top wall of the cooking chamber (11) respectively.

14. The top-visible air fryer according to claim 10, **characterized in that** a heat dissipation channel (15) is arranged in the fryer body (10), the heat dissipation channel (15) is adapted to communicate with atmosphere and arranged around the cooking chamber (11), the heat dissipation channel (15) is internally provided with a heat dissipation component (80) for generating a heat dissipation cold flow, and the heat insulation ring (713) is at least partially located in the heat dissipation channel; further: the heat dissipation component (80) is adapted to be arranged adjacent to the heat insulation ring (713).

15. The top-visible air fryer according to any one of claims 10 to 14, **characterized in that** the heating component comprises a heating tube (61), and the heating tube is a light wave tube; the heating tube is adapted to be arranged around an outer edge of the inner transparent plate.
